# EUROPÄISCHE PATENTANMELDUNG

(11) **EP 3 165 314 A1**
(43) Veröffentlichungstag der Anmeldung: **10.05.2017**
(21) Anmeldenummer: 15193560.8
(22) Anmeldetag: 06.11.2015
(51) Int. Cl.: B23K 9/04

(54) **AUFTRAGSSCHWEISSVERFAHREN**

(71) Anmelder: Plasch, Siegfried, 4600 Wels (AT)
(72) Erfinder: Plasch, Siegfried, 4600 Wels (AT)
(74) Vertreter: Jell, Friedrich

(57) **Zusammenfassung**

Es wird ein Auftragsschweißverfahren (100) gezeigt, bei dem ein Schweißbrenner (1) entlang eines metallischen Werkstücks (2) geführt wird und wobei in den Lichtbogen (4) zwischen wenigstens einer nichtabschmelzenden Elektrode (3) des Schweißbrenners (1) und dem Werkstück (2) mindestens ein abschmelzender Draht (5) als Auftragswerkstoff (6) mit einem Vorschub (9) eingebracht wird. Um ein Auftragsschweißverfahren (100) mit höheren Auftragsgeschwindigkeiten gegenüber dem Stand der Technik zu schaffen, wird vorgeschlagen, dass die nichtabschmelzende Elektrode (3), normal zum Werkstück (2) angestellt, entlang des Werkstücks (2) geführt wird und dass der vorgeschobene Draht (5) zusätzlich entlang seiner Vorschubrichtung (9) vor und zurück bewegt wird.

## Beschreibung

Die Erfindung betrifft ein Auftragsschweißverfahren, bei dem ein Schweißbrenner entlang eines metallischen Werkstücks geführt wird und wobei in den Lichtbogen zwischen wenigstens einer nichtabschmelzenden Elektrode des Schweißbrenners und dem Werkstück mindestens ein abschmelzender Draht als Auftragswerkstoff mit einem Vorschub eingebracht wird.

Aus dem Stand der Technik sind Auftragsschweißverfahren in der DIN EN ISO 6947 Schweißposition PC (ASME: 2G) bekannt, bei dem ein Schweißbrenner (z.B.: WIG-Brenner) horizontal entlang eines vertikal ausgerichteten, feststehenden und metallischen Werkstücks (z.B.: Rohr) geführt wird. Dabei wird in einen, von einer schräg zur Führungsrichtung des Schweißbrenners angestellten nichtabschmelzenden Elektrode (z.B.: Wolframelektrode) erzeugter Lichtbogen ein Draht (z.B.: Heißdraht) mit kontinuierlichem Vorschub eingebracht und abgeschmolzen um einen Schweißauftrag auf dem Werkstoff zu erzeugen. Die Führungsgeschwindigkeit derartiger Auftragsschweißverfahren ist jedoch stark limitiert, da eine Erhöhung der Führungsgeschwindigkeit zu einem Abreißen der Schweißraupe führt. Eine gleichzeitige Erhöhung des Vorschubs des Drahtes führt ebenfalls nicht zu einer Verbesserung. Eine Erhöhung des Durchmessers der nichtabschmelzenden Elektrode auf der anderen Seite führt zu einem stärkeren Aufschmelzen des Werkstücks (einer höheren Einbrandtiefe) und damit zu einer ungewollten Durchmischung zwischen Auftragswerkstoff und Werkstück, welches sich negativ auf die Materialeigenschaften des Auftragswerkstoffes auswirkt. Eine zu langsame Führungsgeschwindigkeit führt wiederum zur Bildung eines großen Schmelzbades und damit verbundener Tropfenbildung.

Die Erfindung hat sich die Aufgabe gestellt, die Geschwindigkeit des Auftragsschweißverfahrens, bei gleichzeitig niedriger Einbrandtiefe, zu erhöhen.

Die Erfindung löst die gestellte Aufgabe dadurch, dass die nichtabschmelzende Elektrode, normal zum Werkstück angestellt, entlang des Werkstücks geführt wird und dass der vorgeschobene Draht zusätzlich entlang seiner Vorschubrichtung vor und zurück bewegt wird.

Wird die die nichtabschmelzende Elektrode, normal zum Werkstück angestellt, entlang des Werkstücks geführt, so kann ein besonders homogener Lichtbogen erreicht werden, welcher ein verbessertes, nämlich gleichmäßiges Abschmelzen des Drahtes ermöglicht. Zudem kann durch die normal zum Werkstück angestellte nichtabschmelzende Elektrode in einer Schweißposition PC eine Kapillarwirkung auf die Schmelze erzeugt werden, wodurch vorteilhaft eine Tropfenbildung aus der Schmelze vermeidbar ist. Wird der vorgeschobene Draht zusätzlich entlang seiner Vorschubrichtung vor und zurück bewegt, so kann die Einbrandtiefe in das Werkstück kontrolliert vermindert werden. Dabei kommt es zu einer im Vergleich zum Stand der Technik geringeren Aufschmelzung des Grundwerkstoffs des Werkstücks, wodurch eine unerwünschte Durchmischung des Grundwerkstoffs mit dem Auftragswerkstoff besonders gut vermieden werden kann. So ist es möglich, einen standfesten Materialauftrag mit besonders guter Verbindung zum Grundwerkstoff zu schaffen - bei weitestgehend unveränderten Materialeigenschaften des Auftragswerkstoffs. Zudem können durch die Amplitude und Frequenz der Vor- und Zurück-Bewegung des Drahtes entlang seiner Vorschubrichtung die Temperaturverhältnisse in der Schmelze derart reguliert werden, dass stets die ideale, gewünschte Einbrandtiefe erreicht wird. Die Kombination von normal zum Werkstück angestellter Elektrode und vor- und zurückbewegten, vorgeschobenen Draht ermöglicht gegenüber dem Stand der Technik überraschenderweise außergewöhnlich hohe Auftragsgeschwindigkeiten, mit denen nicht nur bekannte Auftragsschweißverfahren in der Schweißposition PC sondern auch in der Schweißposition PA erheblich übertroffen werden können. Zudem können die Materialeigenschaften des Auftragswerkstoffes, trotz der hohen Führungsgeschwindigkeit des Schweißbrenners, beibehalten werden. Ein schnelleres und reproduzierbareres Auftragsschweißverfahren kann auf diese Weise geschaffen werden.

Im Allgemeinen wird festgehalten, dass sich das erfindungsgemäße Auftragsschweißen sich insbesondere in der DIN EN ISO 6947 beschriebenen Schweißpositionen PC (ASME: 2G) eignen kann. Hier wird die nichtabschmelzende Elektrode des Schweißbrenners horizontal gegenüber einem vertikalen Werkstück geführt wird. Die primäre Führungsrichtung des Schweißbrenners ist hierbei waagrecht gegenüber dem vertikalen Werkstück. Zum Aufbringen mehrerer übereinander vorgesehener Lagen ist auch eine sekundäre, senkrechte Führung vorgesehen. Im Allgemeinen wird weiter festgehalten, dass unter einem Auftragsschweißverfahren (Cladding) ein Verfahren zum einlagigen oder mehrlagigen Materialauftrag mit überlappenden Schweißraupen auf einem Werkstück mit Hilfe eines Schweißbrenners verstanden wird. Beispielsweise kann dabei auf ein Werkstück mit einem niedriger legierten Grundwerkstoff ein höher legierter Auftragswerkstoff aufgebracht werden.

Wird der Draht zudem in Führungsrichtung des Schweißbrenners vorlaufend in den Lichtbogen eingebracht, kann eine besonders vorteilhafte Kapillarwirkung der Schmelze erzeugt werden - womit die vorstehend genannten Vorteile weiter erhöht werden können.

Die Prozessparameter beim Auftragsschweißverfahren können weiter deutlich verbessert werden, wenn der Draht kontinuierlich vorgeschoben wird. Zudem kann dies in Zusammenhang mit dessen Vor- und Zurückbewegen einer Homogenisierung des Schmelzbads weiter dienlich sein. Die Materialeigenschaften des Auftragswerkstoffes können damit -trotz der hohen Führungsgeschwindigkeit des Schweißbrenners- erhalten bleiben, was für einen hohen Reinheitsgrad des Auftrags am Werkstück genützt werden kann.

Besonders vorteilhafte Schweißverhältnisse können sich ergeben, wenn die nichtabschmelzende Elektrode einen Durchmesser von mindestens 6,4 mm aufweist. Durch den vergleichsweise hohen Elektrodendurchmesser gegenüber dem Stand der Technik, können besonders hohe Führungsgeschwindigkeiten des Schweißbrenners erreicht werden, wodurch ein noch schnellerer Verfahrensablauf ermöglicht wird. Der Einsatz derartig hoher Elektrodendurchmesser wird erst durch die Vor- und Zurückbewegung des Drahtes in seiner Vorschubrichtung ermöglicht, da große Elektrodendurchmesser üblicherweise eine hohe Eibrandtiefen bedingen. Die erfindungsgemäße Bewegung des Drahtes kann jedoch selbst bei hohen Elektrodendurchmessern dafür sorgen, die Einbrandtiefe gering zu halten.

Das erfindungsgemäße Auftragsschweißverfahren kann sich besonders durch seine verfahrenstechnische Einfachheit auszeichnen, wenn der Schweißbrenner entlang eines Rohrmantels eines Rohres geführt wird.

Besonders bevorzug eignet sich das erfindungsgemäße Auftragsschweißverfahren dafür, dass der Schweißbrenner entlang des Rohrinnenmantels geführt wird.

Wird der Schweißbrenner zirkular oder serpentinenförmig entlang des Werkstücks geführt, so kann der Auftragswerkstoff in mehreren vertikal übereinander angeordneten Lagen aufgetragen werden. Erfindungsgemäß kann so ein flächiger Materialauftrag auf verfahrenstechnisch einfache Art und Weise standfest erzeugt werden. Die erfindungsgemäß zusätzlich entlang seiner Vorschubrichtung Vor- und Zurückbewegung des Drahtes kann zudem während des Auftrags weiterer Lagen für eine kontrolliert geringe Einbrandtiefe im Werkstück sorgen - während eine dennoch ausreichend hohe Aufschmelzung der vertikal darunter liegenden Lage erreicht wird, um eine vorteilhafte Verbindung zwischen den Lagen zu erreichen. Ein sehr homogener Schweißauftrag mit bevorzugten Materialeigenschaften ist somit erreichbar, womit sich ein besonders reproduzierbares Verfahren ergeben kann.

Um die Standfestigkeit des Auftragsschweißverfahrens weiter zu erhöhen, kann die nichtabschmelzende Elektrode als Wolframelektrode ausgebildet sein.

Vorzugsweise ist der Schweißbrenner als WIG-Brenner ausgebildet, um damit eine vergleichsweise hohe Schweißgutqualität an der aufgeschweißten Raupe zu schaffen. Dies kann die Reproduzierbarkeit des Verfahrens weiter erhöht werden.

Ist der abschmelzende Draht ein Heißdraht, kann die Auftragsleistung im Verfahren und damit die Prozessgeschwindigkeit weiter erhöht werden. Der beispielsweise mit einer Heißdrahtstromquelle belastete Draht kann nämlich so aufgeheizt in den Lichtbogen eingebracht werden, was zu höheren Abschmelzraten am Draht führen kann.

Bevorzugt kann sich das erfindungsgemäße Auftragsschweißverfahren in der Schweißposition PC eignen.

In den Figuren ist beispielsweise der Erfindungsgegenstand anhand einer Ausführungsvariante näher dargestellt. Es zeigen
- Fig. 1: eine teilweise angerissene Querschnittsansicht durch ein erfindungsgemäßes Auftragsschweißverfahren entlang der x/y-Ebene,
- Fig. 2: eine Draufsicht auf das erfindungsgemäße Verfahren,
- Fig. 3: eine teilweise angerissene Querschnittsansicht durch ein erfindungsgemäßes Auftragsschweißverfahren an einem Rohrmantel.

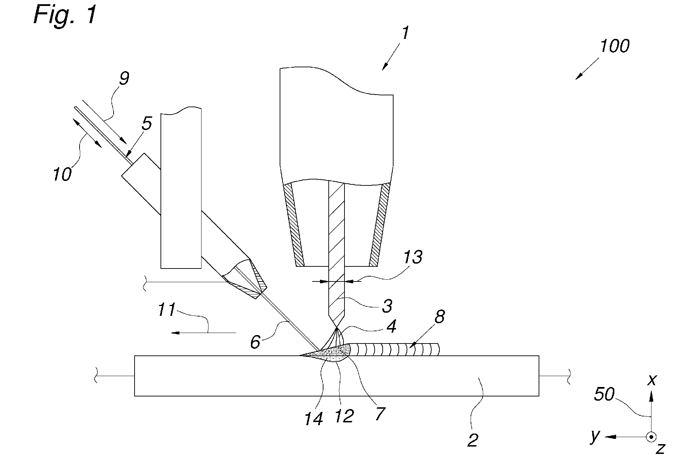

Gemäß Fig. 1 wird ein Auftragsschweißverfahren 100 in der Schweißposition PC gezeigt. Solch ein Auftragsschweißverfahren 100 wird oftmals auch als vertikales Auftragsschweißverfahren bezeichnet. Andere Schweißpositionen nach DIN EN ISO 6947 sind denkbar, beispielsweise PA oder auch H-LO45 (ASME: 6Gu). Dabei wird ein Schweißbrenner 1, nämlich WIG Brenner, entlang eines metallischen Werkstücks 2 geführt. Es sind neben WIG Brenner auch MAG-Brenner etc. vorstellbar. Das Koordinatensystem 50 zeigt die Ausrichtung des Werkstücks 2 im Raum. Auftragsschweißen ist so zu verstehen, dass das Werkstück dabei in der y/z-Ebene, also als vertikal im Raum stehende Fläche, ausgebildet ist, wobei der Schweißbrenner 1 entlang der y-Achse, also im Wesentlichen waagrecht, geführt wird. Hierbei ist im Allgemeinen vorstellbar, dass diese Bewegung des Schweißbrenner 1 in Führungsrichtung 11 mit einer pendelnden Bewegung parallel zum Werkstück 2 überlagert wird, was nicht näher dargestellt worden ist.

Zwischen einer nichtabschmelzende Elektrode 3, nämlich Wolframelektrode, des Schweißbrenners 1 und dem metallischen Werkstück 2 wird ein Lichtbogen 4 erzeugt, in welchen ein Draht 5, nämlich erhitzt als Heißdraht, als Auftragswerkstoff 6 zum Abschmelzen eingeführt wird. Der Draht 5 kann auch als Kaltdraht verwendet werden. Der aufgeschmolzene Auftragswerkstoff 6 erzeugt auf dem Werkstück 2 eine Schmelze 7, zur Ausbildung einer Schweißraupe 8. Der Draht 5 wird dabei mit einem kontinuierlichen Vorschub in den Lichtbogen 4 eingebracht. Zusätzlich zu dem kontinuierlichen Vorschub 9, wird der Draht 5 entlang seiner Vorschubrichtung vor und zurück bewegt. Beispielsweise ist eine Vor- und Zurückbewegung des Drahts 5 mit einer Überlagerungsamplitude von 4 bis 12 mm vorstellbar.

Üblicherweise stellt sich eine Einbrandtiefe 12 vor allem in Abhängigkeit des Durchmessers 13 der nichtabschmelzenden Elektrode 3 und der Führungsgeschwindigkeit des Schweißbrenners 1 gegenüber dem Werkstück ein. Durch die Vor- und Zurück-Bewegung 10 des Drahtes 5 wird die Einbrandtiefe 12 im Werkstück 2 derart reguliert, dass bei gleichzeitiger Verwendung einer nichtabschmelzenden Elektrode 3 mit großem Durchmesser 13 und schneller Führungsgeschwindigkeit die Einbrandtiefe 12 gering bleibt. Dadurch kann eine unerwünschte Durchmischung des Auftragswerkstoffs 6 mit dem Grundwerkstoff 14 des Werkstücks 2 vermieden werden. Erfindungsgemäß ist die nichtabschmelzende Elektrode 3 ist bei dem Auftragsschweißverfahren 1 normal zum Werkstück 2 angestellt und wird in Vorschubrichtung 11 des Schweißbrenners 1 kontinuierlich über das Werkstück 2 bewegt, um eine ausgedehnte Schweißraupe 8 auf dem Werkstück aufzutragen. Die normal zum Werkstück 2 angestellte nichtabschmelzende Elektrode 3 sorgt dabei für einen besonders homogenen Lichtbogen und somit für ein gleichmäßiges, kontrolliertes Abschmelzen des Drahtes 5.

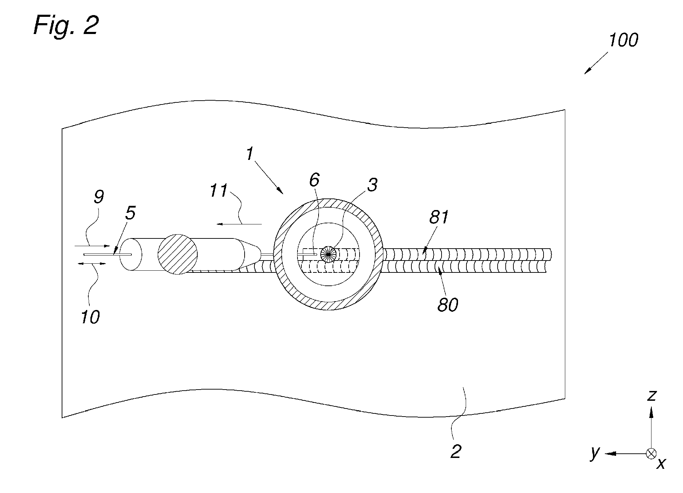

In Fig. 2 ist eine Draufsicht auf das Werkstück 2 gezeigt. Dabei ist zu erkennen, dass bei dem Auftragsschweißverfahren 1 mehrere Schweißraupen 80, 81 am Werkstück 2, in vertikaler Richtung übereinander und überlappend aufgetragen sind. Die Führung des Schweißbrenners 1 erfolgt serpentinenförmig von unten nach oben. Zuerst wird die erste Schweißraupe 80, insbesondere von links nach rechts, und in der Rückwärtsbewegung die zweite Schweißraupe 81 über der ersten Schweißraupe 80 aufgebracht. Ein zweidimensionaler Auftrag kann so auf verfahrenstechnisch einfache Weise geschaffen werden.

Wie in Fig. 1 und Fig. 2 gezeigt, wird der Draht 5, dem Schweißbrenner in seiner Führungsrichtung 11 vorlaufend in den Lichtbogen 4 eingebracht. Dadurch wird eine kontinuierliche und gleichmäßige Zufuhr des Auftragswerkstoffes 6 in die Schmelze 7 sichergestellt.

Als besonders vorteilhaft hat sich herausgestellt, wenn der Durchmesser 13 der nichtabschmelzenden Elektrode 3 mindestens 6,4 mm beträgt. Dadurch kann nämlich eine hohe Führungsgeschwindigkeit des Schweißbrenners 1 in Führungsrichtung 11 erreicht werden.

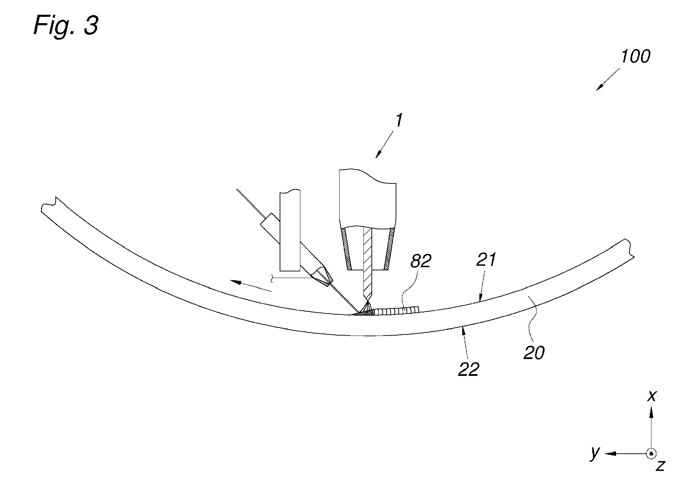

In Fig. 3 ist eine Auftragsschweißverfahren 1 gezeigt, wobei der Schweißbrenner 1 an einem Rohrinnenmantel 21 eines vertikalen Rohres 20, zirkular umlaufend geführt wird. Dabei kann insbesondere eine geschlossene, kreisringförmige Schweißraupe 82 am Rohrinnenmantel 21 angebracht werden. Zudem ist der Schweißbrenner 1 ebenso geeignet eine Schweißraupe am Rohraußenmantel 22 des Rohres 20 anzubringen.

## Patentansprüche

1. Auftragsschweißverfahren, bei dem ein Schweißbrenner (1) entlang eines metallischen Werkstücks (2) geführt wird und wobei in den Lichtbogen (4) zwischen wenigstens einer nichtabschmelzenden Elektrode (3) des Schweißbrenners (1) und dem Werkstück (2) mindestens ein abschmelzender Draht (5) als Auftragswerkstoff (6) mit einem Vorschub (9) eingebracht wird, **dadurch gekennzeichnet, dass** die nichtabschmelzende Elektrode (3), normal zum Werkstück (2) angestellt, entlang des Werkstücks (2) geführt wird und dass der vorgeschobene Draht (5) zusätzlich entlang seiner Vorschubrichtung (9) vor und zurück bewegt wird.

2. Auftragsschweißverfahren nach Anspruch 1, **dadurch gekennzeichnet, dass** der Draht (5) in Führungsrichtung (11) des Schweißbrenner (1) vorlaufend in den Lichtbogen (4) eingebracht wird.

3. Auftragsschweißverfahren nach Anspruch 1 oder 2, **dadurch gekennzeichnet, dass** der Draht (5) kontinuierlich vorgeschoben wird.

4. Auftragsschweißverfahren nach einem der Ansprüche 1 bis 3, **dadurch gekennzeichnet, dass** die nichtabschmelzende Elektrode (3) einen Durchmesser (13) von mindestens 6,4 mm aufweist.

5. Auftragsschweißverfahren nach einem der Ansprüche 1 bis 4, **dadurch gekennzeichnet, dass** der Schweißbrenner (1) entlang eines Rohrmantels (21, 22) eines Rohres (20) geführt wird.

6. Auftragsschweißverfahren nach Anspruch 5, **dadurch gekennzeichnet, dass** der Schweißbrenner entlang des Rohrinnenmantels (21) geführt wird.

7. Auftragsschweißverfahren nach einem der Ansprüche 1 bis 6, **dadurch gekennzeichnet, dass** der Schweißbrenner (1) zirkular oder serpentinenförmig entlang des Werkstücks (2) geführt wird.

8. Auftragsschweißverfahren nach einem der Ansprüche 1 bis 7, **dadurch gekennzeichnet, dass** die nichtabschmelzende Elektrode (3) als Wolframelektrode ausgebildet ist.

9. Auftragsschweißverfahren nach einem der Ansprüche 1 bis 8, **dadurch gekennzeichnet, dass** der Schweißbrenner (1) als WIG-Brenner ausgebildet ist.

10. Auftragsschweißverfahren nach einem der Ansprüche 1 bis 9, **dadurch gekennzeichnet, dass** abschmelzende Draht (5) ein Heißdraht ist.

11. Auftragsschweißverfahren nach einem der Ansprüche 1 bis 10 in der Schweißposition PC.
